Europäisches Patentamt

European Patent Office

Office européen des brevets

(11) Publication number: **0 125 757**
**B1**

(12) **EUROPEAN PATENT SPECIFICATION**

(45) Date of publication of patent specification: **08.06.88**

(21) Application number: **84301665.0**

(22) Date of filing: **13.03.84**

(51) Int. Cl.⁴: **F 16 H 9/24,** F 16 G 5/18

(54) **V-belt transmissions.**

(30) Priority: **14.03.83 JP 40782/83**
**14.03.83 JP 40783/83**
**14.03.83 JP 40784/83**
**23.05.83 JP 89083/83**

(43) Date of publication of application:
**21.11.84 Bulletin 84/47**

(45) Publication of the grant of the patent:
**08.06.88 Bulletin 88/23**

(84) Designated Contracting States:
**DE FR GB NL**

(56) References cited:
**EP-A-0 047 587**
**DE-C- 849 944**
**GB-A-1 232 376**
**JP-A-57 018 836**
**US-A-4 338 081**

(73) Proprietor: **HONDA GIKEN KOGYO KABUSHIKI
KAISHA**
**27-8, Jingumae, 6-chome**
**Shibuya-ku, Tokyo 150 (JP)**

(72) Inventor: **Hattori, Torao**
**1-13-28, Shirako**
**Saitama-ken (JP)**

(74) Representative: **MacFarlane, John Anthony
Christopher et al**
**HASELTINE LAKE & CO. Hazlitt House 28,
Southampton Buildings Chancery Lane
London WC2A 1AT (GB)**

Courier Press, Leamington Spa, England.

## Description

This invention relates to V-belt transmissions usable in stepless variable speed transmissions in vehicles. The invention is particularly concerned with a V-belt transmission in which an endless metallic belt is provided with a large number of V-shaped metallic members, each having an engaging surface facing the metallic belt, the metallic members being disposed in an array in the lengthwise direction of the endless metallic belt so as to make, as a whole, a V-belt assembly, and this V-belt assembly is applied between a driving V-pulley and a driven pulley for effecting power transmission therebetween. The features as defined in the first part of claim 1 are known from JP—A—57018836. For such a V-belt assembly it has been proposed that intermediate members such as hollow rollers are so interposed between respective adjacent metallic members and positioned inside the endless metallic belt as to be fastened together from the outer periphery with the metallic belt, and by this fastening, the respective metallic members are connected to the metallic belt through the respective intermediate members. In this case, in order that a tension force caused by turning of the driving V-pulley may act on the metallic belt and make an effective power transmission, it is desirable further to increase the connections between the respective metallic members and the metallic belt in a turning region of the belt at the V-pulley.

According to the present invention there is provided a V-belt transmission in which an endless metallic belt is provided with a large number of V-shaped metallic members, each having an engaging surface facing the metallic belt, the metallic members being disposed in an array along the lengthwise direction of the endless metallic belt so as to make, as a whole, a V-belt assembly, this V-belt assembly being applied between a driving V-pulley and a driven V-pulley so as to effect power transmission therebetween; and a large number of intermediate members so interposed between respective adjacent metallic members and positioned inside the metallic belt as to be fastened together from the outer periphery thereof with the metallic belt; characterised in that each of the V-shaped metallic members is so held between a corresponding two of the intermediate members which are located on mutually opposite sides of the metallic member in the lengthwise direction of the metallic belt as to be movable inwards and outwards so that when the respective V-shaped metallic members are brought into engagement with either of the V-pulleys the metallic members are pushed by the V-pulley to be moved outwards to be brought into pressure contact connection at their engaging surfaces, with the metallic belt. By arranging that when respective V-shaped metallic members are brought into engagement with respective V-pulleys, the metallic members are forced to move outwards to be brought into pressure contact connection with the inner circumferential surface of the metallic belt, the connection of the metallic members with the metallic belt can be increased in comparison with a V-belt assembly in which the V-shaped metallic members are connected only through the intermediate members to the metallic belt.

For a better understanding of the invention and to show how the same may be carried into effect, reference will now be made, by way of example, to the accompanying drawings, in which:—

Figure 1 is a side view, partly in section, of a variable speed power transmission;

Figure 2 is an enlarged sectional side view of a portion of the transmission of Figure 1;

Figures 3 to 5 are sectional views taken, respectively, along lines III—III, IV—IV and V—V in Figure 2;

Figure 6 is a sectional side view on a larger scale of a V-shaped metallic member of a V-belt of the transmission of Figures 1 to 5;

Figure 7 is a sectional side view similar to Figure 6 but of a modified metallic member, and

Figures 8 to 11 are sectional views similar to Figure 4 but of modified form.

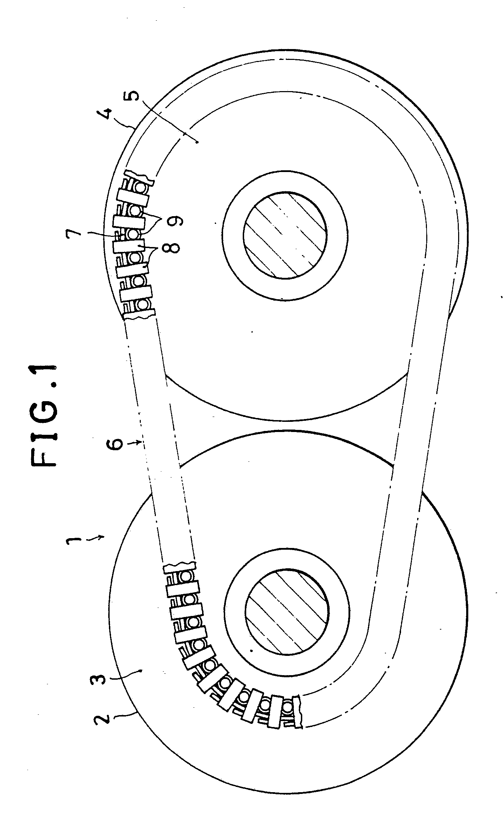

Referring first to Figures 1 to 6 numeral 1 denotes the variable speed transmission, which is for a motorised two-wheeled vehicle. In the transmission 1 a V-belt assembly 6 is applied between a V-groove 3 of a variable driving V-pulley 2 and a V-groove 5 of a variable driven V-pulley 4 for effecting power transmission between the two pulleys 2, 4.

In the V-belt assembly 6 an endless metallic belt 7, which comprises plural belt members 7a, 7a,. . . of hoop configuration put one upon another in layers, is provided with a large number of V-shaped metallic members 8, 8, . . ., each having both lateral inclined surfaces 8a, 8a disposed to be brought into contact with the inner surface of each of the V-grooves 3, 5, the metallic members 8, 8, . . . being disposed in an array in the lengthwise direction of the metallic belt 7. Intermediate members 9, 9,. . . are so interposed between respective adjacent metallic members 8, 8. . . and positioned inside the metallic belt 7 as to be fastened together from the outer periphery thereof with the metallic belt 7, and, by this fastening, the respective metallic members 8, 8,. . . are connected to the metallic belt 7 through the respective intermediate members 9, 9. . . .

In the illustrated example, each of the metallic members 8, 8, . . . is provided with a groove 11 which is open outwards and has at its bottom portion an engaging surface 10 facing the metallic belt 7, and each of the metallic members 8, 8. . . is mounted at its groove 11 on the metallic belt 7 from inside. For each member 8, a retainer 13 facing the outer circumferential surface of the metallic belt 7 is mounted in the groove 11 in engagement with engaging grooves 12, 12 made in upper portions of side wall portions 11a, 11a defining both sides of the groove 11, so that the respective metallic members 8, 8, . . . are prevented by the respective retainers 13, 13,. . . from coming off inwards from the belt 7.

Each of the metallic members 8, 8, ... is so held between a corresponding pair of intermediate members 9, 9 located on mutually opposite sides of the member 8 in the lengthwise direction of the metallic belt 7 as to be movable inwards and outwards, so that when each of the metallic members 8, 8, ... is brought into engagement with each of the V-pulleys 2, 4, the member 8 is pushed by the V-groove of the corresponding V-pulley to slide outwards to be brought into pressure contact connection, at the engaging surface 10, with a lower surface of the metallic belt 7. Consequently, when the respective metallic members 8, 8, ... are brought into engagement with the driving V-pulley 2 and accordingly are turned by the turning of this V-pulley 2, the metallic belt 7 can be given a tension driving force in accordance therewith.

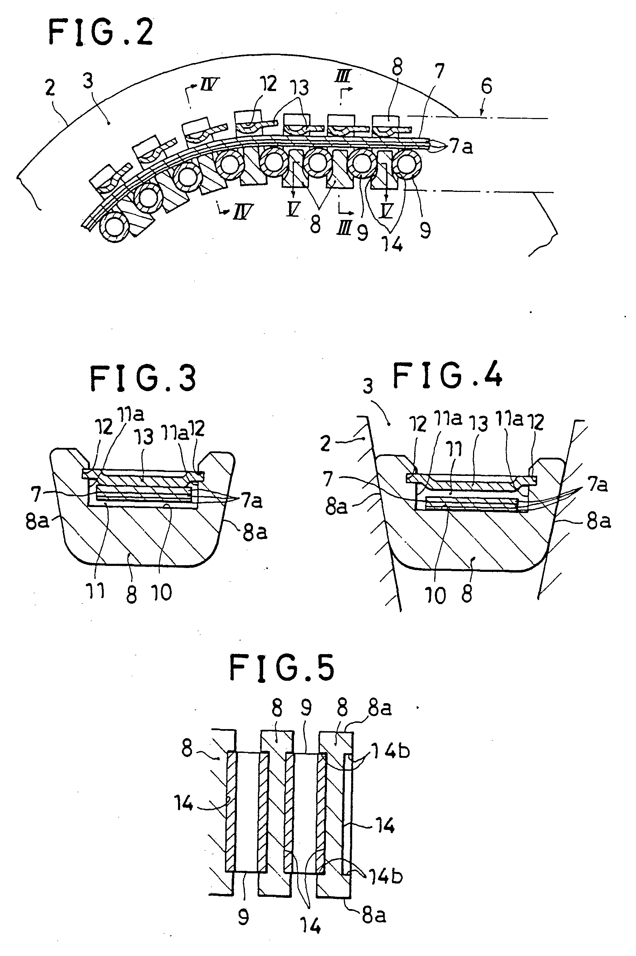

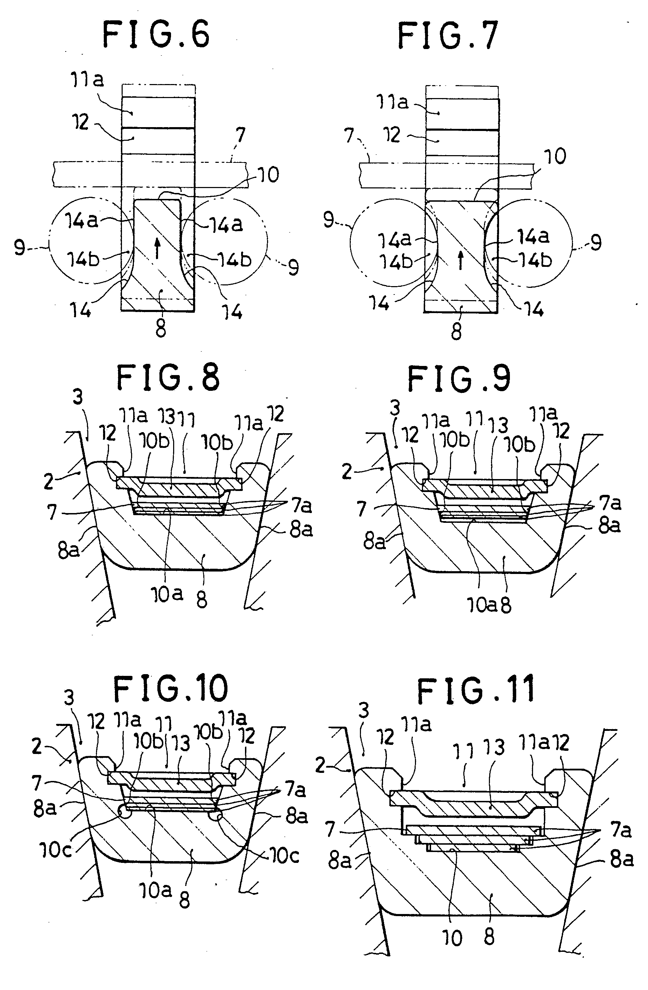

In more detail, each of the metallic members 8, 8, ... is in engagement with a corresponding pair of the intermediate members 9, 9 at its recessed receiving surfaces 14, 14 that are in mutually opposite surfaces located in the lengthwise direction of the metallic belt 7. In this case each of the recessed receiving surfaces 14, 14 is not shaped to conform to a shape of each of the intermediate members 9, 9 but is, instead, shaped such that it has a linear plane 14a extending in inner and outer directions, as shown in Figure 6 or 7, so that each of the metallic members 8, 8, ... may be allowed to move inwards and outwards within the range of this linear plane 14a. Thus, at a linear movement region of the V-belt assembly 6, as shown in Figure 3, there exists more or less of a gap between the metallic belt 7 and the engaging surface 10 facing thereto, but at a turning movement region of the assembly 6, in which it is engaged with one or other of the V-pulleys 2, 4 as shown in Figure 4, each of the metallic members 8, 8, ... is pushed by the pulley to move outwards, the metallic belt 7 and the engaging surface 10 are in pressure contact with one another, and there is established such a condition that the metallic belt 7 and each of the metallic members 8, 8, ... are firmly connected together.

In order to make smooth relative inclining motions of the respective V-shaped metallic members 8, 8, ... at the turning movement region, each of the intermediate members 9, 9, ... is preferably so formed that at least a contact surface thereof which is in contact with each receiving surface 14 is in the form of an arc in section. Additionally, it is preferable that some or all of the intermediate members 9, 9, ... are formed as hollow-resilient metallic members so that any torque change may be absorbed and any generation of a play gap which would be caused by elongation of the belt may be prevented by the resiliency thereof. Accordingly, in the illustrated example, each of the intermediate members 9, 9, ... is a hollow slender resilient metallic roller.

As shown in Figure 5, the receiving surface 14 is formed to have opposite lateral side walls 14b, 14b arranged to be in abutment with lateral end surfaces of each intermediate member 9, and thereby the respective V-shaped metallic members 8, 8, ... may be restricted against movement in the lateral directions, resulting in their smooth contact with each of the V-pulleys 2, 4.

In the foregoing example, the engaging surface 10 is so arranged as to be brought into pressure contact with the inner surface of the metallic belt 7, but it can be that, as shown in Figure 8, for instance, the metallic belt 7 is a nearly V-shape in section that is gradually narrower towards the inside, and the engaging surface 10 is a nearly V-shape in section that conforms thereto. With this arrangement, when the respective V-shaped metallic members 8, 8, ... are moved outwards, the engagement between the metallic belt 7 and each of the V-shaped metallic members 8, 8, ... is carried out at their respective V-shaped surfaces, so that the connecting force between the two is increased. In more detail, if the engaging surface 10 is composed of a flat plane 10a facing the inner surface of the metallic belt 7 and taper surfaces 10b, 10b on both lateral sides thereof, then even in an occasion where the flat plane 10a is not brought into pressure contact with the inner surface of the metallic belt 7, as shown in Figure 9, the metallic belt 7 is wedged between the taper surfaces 10b, 10b and a good connection between the belt 7 and the V-shaped metallic member 8 can be obtained.

In all the forms illustrated, in order to improve the bending property of the metallic belt 7 by uniformly distributing the stresses applied to the belt at the time of bending thereof at the V-pulleys, the same is composed of plural steel belt members 7a, 7a, ... which are plates of different thicknesses which are so put one upon another in layers as to be gradually thinner towards the inside. Additionally, the example shown in Figure 8 may be further modified as shown in Figure 10 wherein, in order to minimise damage to the innermost thinnest member 7a possibly caused by the action of side pressures, lateral corner edge portions of the nearly V-shaped engaging surface 10 are formed with curved portions 10c, 10c, so that the innermost layer 7a is not acted upon by the side pressures.

Regarding the decrease in thickness of the plates 7a, 7a ..., in more detail, the maximum bending stress $\sigma_{max}$ is expressed by the following formula:—

$$\sigma_{max} = M/I \times t/2,$$

where the bending moment is M, the second moment of area is I and the thickness is t.

Thus, in the inner layer metallic plate 7a is decreased in thickness by the increasing amount of the bending moment M, there is no difference in the maximum bending stress between an inner layer plate and an outer layer plate, and it can be prevented that the inner layer metallic plate 7a is fatigued earlier than the outer layer metallic plate 7a by repeated bending actions.

Thus, by providing that the metallic plates constituting the metallic belt are decreased in thickness towards the inside, the stresses applied to the belt at the time of bending thereof at the V-pulleys can be uniformly distributed, and the useful life of the belt can be elongated.

In the modification shown in Figure 11, the hoop-configuration belt members 7a, 7a, . . . constituting the metallic belt 7 are so put one upon another in layers as to be gradually narrower towards the innermost side so that each of both lateral sides surfaces of the metallic belt 7 are, overall, in the form of a stepped V-shape in section, and each taper surface 11a of the engaging surface 10 is a stepped V-shape in section conforming thereto. With this arrangement, the metallic belt 7 is in engagement at respective hoop-configuration belt members 7a, with the engaging surface 10 so that the connecting force between the two can be increased as a whole.

By arranging in the present V-belt assembly that when respective V-shaped metallic members are brought into engagement with respective V-pulleys, the metallic members are forced to move outwards to be brought into pressure contact connection with the inner circumferential surface of the metallic belt, the connection of the metallic members with the metallic belt can be increased in comparison with a V-belt assembly in which the V-shaped metallic members are connected only through the intermediate members to the metallic belt.

## Claims

1. A V-belt transmission in which an endless metallic belt (7) is provided with a large number of V-shaped metallic members (8, 8. . .), each having an engaging surface (10) facing the metallic belt, the metallic members being disposed in an array along the lengthwise direction of the endless metallic belt so as to make, as a whole, a V-belt assembly, this V-belt assembly being applied between a driving V-pulley (2) and a driven V-pulley (4) so as to effect power transmission therebetween; and a large number of intermediate members (9, 9, . . .) so interposed between respective adjacent metallic members (8, 8, . . .) and positioned inside the metallic belt (7) as to be fastened together from the outer periphery thereof with the metallic belt; characterised in that each of the V-shaped metallic members (8, 8, . . .) is so held between a corresponding two of the intermediate members (9, 9, . . .) which are located on mutually opposite sides of the metallic member (8) in the lengthwise direction of the metallic belt (7) as to be movable inwards and outwards so that when the respective V-shaped metallic members (8, 8, . . .) are brought into engagement with either of the V-pulleys (2, 4) the metallic members (8, 8, . . .) are pushed by the V-pulley (2 or 4) to be moved outwards to be brought into pressure contact connection, at their engaging surfaces (10), with the metallic belt (7).

2. A V-belt transmission as claimed in claim 1, wherein a contact surface of each of the intermediate members (9, 9, . . .) for each of the metallic members (8, 8, . . .) is in the form of an arc in section (Fig. 6, 7).

3. A V-belt transmission as claimed in claim 1 or 2, wherein at least some of the intermediate members (9, 9, . . .) are hollow resilient metallic members.

4. A V-belt transmission as claimed in claim 1, 2 or 3, wherein the metallic belt (7) is in such a nearly V-shape in section that it is gradually narrower towards the inside, and the engaging surfaces of the metallic members (8, 8, . . .) are nearly V-shape in section conforming thereto. (Fig. 8—10).

5. A V-belt transmission as claimed in any one of the preceding claims, wherein the metallic belt (7) is formed of plural hoop-configuration belt members (7a, 7a, . . .) which are gradually decreased in width towards the inside and which are put one upon another in layers to be in a stepped V-shape in section; and wherein the engaging surfaces of the metallic members (8, 8, . . .) are of stepped V-shape in section nearly corresponding thereto. (Fig. 11).

6. A V-belt transmission as claimed in claim 5, wherein the belt member (7a, 7a, . . .) are gradually decreased in width stepwise.

7. A V-belt transmission as claimed in any one of the preceding claims, wherein each of the metallic members (8, 8, . . .) is provided with a groove (11), which is open outwardly and which has at its bottom portion the engaging surface (10), each metallic member (8, 8, . . .) being mounted, at its groove (11), on the metallic belt (7) from inside; and wherein a retainer (13) facing the outer surface of the metallic belt (7) is fixedly provided in the groove (11) so that each of the metallic members (8, 8, . . .) is prevented from coming off inwards from the belt (7).

8. A V-belt transmission as claimed in any one of the preceding claims, wherein the metallic belt (7) comprises plural endless metallic plates (7a, 7a, . . .) put one upon another in layers, these plates being decreased in thickness towards the inside.

## Patentansprüche

1. Keilriemen-Transmission
mit einem endlosen Metallriemen (7) mit einer großen Anzahl von V-förmigen Metallgliedern (8, 8, . . .), die alle eine dem Metallriemen zugewandte Angriffsfläche (10) haben und in einer Reihe in Längsrichtung des endlosen Metallriemens derart angeordnet sind, daß sie als ganzes eine Keilriemen-Anordnung bilden, die zwischen einer antriebenden Keilriemen-Scheibe (2) und einer angetriebenen Keilriemen-Scheibe (4) angebracht sind, so daß sie eine Leistungsübertragung zwischen diesen Keilriemen-Scheiben bewirken,
sowie mit einer großen Anzahl von Zwischengliedern (9, 9, . . .), die jeweils zwischen einander benachbarten Metallgliedern (8, 8, . . .) derart eingefügt und innerhalb des Metallriemens (7) derart positioniert sind, daß sie von deren Außenperipherie mit dem Metallriemen (7) verbunden sind, dadurch gekennzeichnet,

daß jedes der V-förmigen Metallglieder (8, 8, ...) jeweils zwischen zwei Zwischengliedern (9, 9, ...), die in Längsrichtung des Metallriemens (7) auf entgegengesetzten Seiten des Metallglieds (8) liegen, so gehalten ist, daß es

nach innen und außen bewegbar ist, so daß die betreffenden V-förmigen Metallglieder (8, 8, ...) dann, wenn sie mit einer der Keilriemen-Scheiben (2, 4) in Eingriff kommen, von diesen abgestoßen und nach außen bewegt werden und ihre Angriffsflächen (10) mit dem Metallriemen (7) in Druckkontaktverbindung gebracht werden.

2. Keilriemen-Transmission nach Anspruch 1, bei der jedes Zwischenglied (9, 9, ...) eine Berührungsfläche mit bogenförmigem Querschnitt für die zugeordneten Metalglieder (8, 8, ...) besitzt (Fig. 6, 7).

3. Keilriemen-Transmission nach Anspruch 1 oder 2, bei der wenigstens einige der Zwischenglieder (9, 9, ...) von hohlen, elastischen Metallgliedern gebildet sind.

4. Keilriemen-Transmission nach Anspruch 1, 2 oder 3, bei der der Metallriemen (7) einen annähernd V-förmigen, nach innen allmählich enger werdenden Querschnitt hat und die Angriffsflächen der Metallglieder (8, 8, ...) einen hieren angepassten annähernd V-förmigen Querschnitt haben (Fig. 8 bis 10).

5. Keilriemen-Transmission nach einem der vorhergehenden Ansprüche,

bei der der Metallriemen (7) aus mehreren bandförmigen Riemenelementen (7a, 7a, ...) gebildet ist, deren Breite zur Innenseite hin allmählich abnimmt und die in Schichten übereinander gelegt sind, so daß sich ein abgestufter V-förmiger Querschnitt ergibt,

und bei der Angriffsflächen der Metallglieder (8, 8, ...) einen dem genannten Querschnitt annähernd entsprechenden abgestuften V-förmigen Querschnitt besitzen (Fig. 11).

6. Keilriemen-Transmission nach Anspruch 5, bei der die Breite der Riemenelemente (7a, 7a, ...) allmählich schrittweise abnimmt.

7. Keilriemen-Transmission nach einem der vorhergehenden Ansprüche,

bei der jedes der Metallglieder (8, 8, ...) eine nach außen offene Nut (11) besitzt, deren Bodenabschnitt die genannte Angriffsfläche (10) bildet, bei der ferner jedes Metallglied (8, 8, ...) mit seiner Nut (11) von innen auf dem Metallriemen (7) montiert ist,

und bei der ein der Außenfläche des Metallriemens (7) zugewandter Halter (13) fest in der Nut angeordnet ist, der verhindert, daß die einzelnen Metallglieder (8, 8, ...) sich nach innen aus dem Metallriemen (7) lösen.

8. Keilriemen-Transmission nach einem der vorhergehenden Ansprüche, bei der der Metallriemen (7) mehrere in Schichten aufeinandergelegte endlose Metallstreifen (7a, 7a, ...) besitzt, deren Stärke nach innen kleiner wird.

## Revendications

1. Transmission par courroie en V, dans laquelle une courroie métallique sans fin (7) est munie d'un grand nombre de pièces métalliques (8, 8 ...) en forme de V présentant chacune une surface de contact (10) qui est tournée vers la courroie métallique, lesdites pièces métalliques étant agencées en une rangée le long de la direction longitudinale de la courroie métallique sans fin, de façon à constituer associativement un ensemble à courroie en V, cet ensemble à courroie en V étant implanté entre une poulie en V (2) menante et une poulie en V (4) menée, afin d'assurer une transmission de puissance entre ces dernières; et d'un grand nombre de pièces intercalaires (9, 9 ...) interposées entre des pièces métalliques adjacentes respectives (8, 8 ...), et positionnées à l'intérieur de la courroie métallique (7), de manière à être assujetties à cette courroie métallique à partir de leur périphérie externe; caractérisée par le fait que chacune des pièces métalliques (8, 8 ... ) en forme de V est retenue, entre une paire correspondante des pièces intercalaires (9, 9 ...) situées sur des côtés mutuellement opposés de la pièce métallique (8), dans la direction longitudinale de la courroie métallique (7), de façon à être mobile vers l'intérieur et vers l'extérieur, de telle sorte que, lorsque les pièces métalliques respectives (8, 8 ... ) en forme de V sont mises en prise avec l'une ou l'autre des poulies en V (2, 4), ces pièces métalliques (8, 8 ...) soient poussées par la poulie en V (2 ou 4) pour être déplacées vers l'extérieur, afin d'être mises en contact par pression avec la courroie métallique (7) sur leur surfaces de contact (10).

2. Transmission par courroie en V selon la revendication 1, dans laquelle une surface de contact de chacune des pièces intercalaires (9, 9 ...) pour chacune des pièces métalliques (8, 8 ...) présente une section en forme d'arc de cercle (figures 6, 7).

3. Transmission par courroie en V selon la revendication 1 ou 2, dans laquelle au moins quelques-unes des pièces intercalaires (9, 9 ...) sont des pièces métalliques creuses et élastiques.

4. Transmission par courroie en V selon la revendication 1, 2 ou 3, dans laquelle la courroie métallique (7) présente une section approximativement en forme de V, de manière à se rétrécir progressivement vers l'intérieur, et les surfaces de contact des pièces métalliques (8, 8 ...) possèdent une section complémentaire approximativement en forme de V (figures 8—10).

5. Transmission par courroie en V selon l'une quelconque des revendications précédentes, dans laquelle la courroie métallique (7) est constituée par de multiples pièces de courroie (7a, 7a ...) de configuration recourbée, qui décroissent progressivement de largeur vers l'intérieur et sont disposées par couches les unes au-dessus des autres, de manière à présenter une section en V étagé; et dans laquelle les surfaces de contact des pièces métalliques (8, 8 ... ) possèdent une section en V étagé, approximativement correspondante (figure 11).

6. Transmission par courroie en V selon la revendication 5, dans laquelle les pièces (7a, 7a ...) de la courroie diminuent progressivement de largeur par échelons.

7. Transmission par courroie en V selon l'une quelconque des revendications précédentes, dans laquelle chacune des pièces métalliques (8, 8 ...) est munie d'une dépouille (11) qui est ouverte vers l'extérieur et présente la surface de contact (10) dans sa région de fond, chaque pièce métallique (8, 8 ...) étant montée de l'intérieur sur la courroie métallique (7), par sa dépouille (11); et dans laquelle un organe de retenue (13) tourné vers la surface externe de la courroie métallique (7) est installé rigidement dans la dépouille (11), de telle sorte que chacune des pièces métalliques (8, 8 ...) soit empêchée de se dissocier de la courroie (7), vers l'intérieur.

8. Transmission par courroie en V selon l'une quelconque des revendications précédentes, dans laquelle la courroie métallique (7) est constituée par de multiples plaquettes métalliques sans fin (7a, 7a ...) disposées par couches les unes au-dessus des autres, ces plaquettes décroissant d'épaisseur vers l'intérieur.

FIG.1

0 125 757

# FIG.2

# FIG.3

# FIG.4

# FIG.5

2

0 125 757

# FIG.6

# FIG.7

# FIG.8

# FIG.9

# FIG.10

# FIG.11